# EUROPEAN PATENT SPECIFICATION

(11) **EP 1 017 211 B1**
(45) Date of publication and mention of the grant of the patent: **26.10.2005**
(21) Application number: 99126236.1
(22) Date of filing: 30.12.1999
(51) Int. Cl.: H04M 3/00, H04M 19/00

(54) **Monolithically integrated telephone circuit for driving wide-band telephone lines for data transmission**
Monolitisch integrierte Teilnehmerschaltungsanordnung zur treiben einer Breitbandleitung für datenübertragung
Circuit téléphonique à intégration monolithique pour commander une ligne à large bande de transmission de donnees

(30) Priority: 31.12.1998 EP 98830810
(43) Date of publication of application: 05.07.2000
(73) Proprietor: STMicroelectronics S.r.l., 20041 Agrate Brianza (Milano) (IT)
(72) Inventor: Pasetti, Mauro, 20100 Milano (IT); Milanese, Carlo Maria, 90142 Olevano di Lomellina (PV) (IT)
(74) Representative: Botti, Mario

(56) References cited:
- EP-A- 0 446 944
- EP-A- 0 543 161
- EP-A- 0 637 161
- WO-A-94/17619

## Description

### FIELD OF THE INVENTION

This invention relates to an integrated interface circuit for driving a subscriber's telephone line, being of the type which includes at least one output stage connected to the telephone line, and specifically to driving wide-band telephone lines and transmitting digital data at a very high frequency.

### BACKGROUND OF THE INVENTION

Embodiments of the invention relate to a monolithically integrated circuit for driving wide-band telephone lines and transmitting digital data at a very high frequency. The circuit is powered from a battery DC supply providing a pair of voltage references and comprises an output circuit portion including a pair of differential output stages. Each stage has a pair of inputs and being connected with its output to a respective lead of a two-wire telephone line.

This invention is applicable, in particular, to interface telephone circuits for driving the lines linked to subscribers' phone sets, but nothing in this description should limit the scope of the invention or the claims to only that field.

These interface circuits, *e.g*., of the type known as SLICs (Subscriber Line Interface Circuits) in the trade, are connected between the subscriber's telephone lines and the exchange internal circuitry, and are adapted to supply the telephone line with a predetermined line voltage and current dependent on the line resistive load.

There exists a demand in this field for telephone line communications of improved quality, as well as for a wider range of subscriber services. For example, services are currently being offered which involve transmission of digital information over the telephone lines.

Continued improvement in the quality of telephone line transmission is needed to fill such demands involving increased sophistication.

Since the inception of Internet and other digital communications facilities utilizing the telephone line pair for data transmission, it became necessary to remove current restrictions on the rate of data transmission using 64kbits/sec speech modems. New transmission standards are being developed to improve the transmission rate without forfeiting compatibility with current telephone apparatus.

A dawning standard in the market is that known as ADSL (Asymmetric Digital Subscriber Line), which provides for the transmission at 4.3125 Hz spacings of carriers having an analog band upper limit of 1.1 MHz. These signals are added, through appropriate electromechanical circuits (transformers, capacitors, inductors, and resistors) to the standard telephone signal, using a so-called POTS splitting technique.

Stated otherwise, the POTS (Plain Old Telephone Set) function is served by conventional integrated circuits of the SLIC type, as described in this Applicant's US Patents No.s 5,440,612 and 5,612,998, for example. A further example is given in EP-A-0 446 944.

On the other hand, the ADSL function is made possible by circuits of a new design which are adapted to transmit, receive and decode this type of a signal.

Furthermore, there exists a subset of the ADSL specifications, referred to as ADSL_Lite, which being somewhat inferior in performance, and less expensive for the user, allows data to be transmitted at a rate of 1.5 Mbits/sec in a 550 kHz analog band. The ADSL_Lite specification is presently a subject for debate, and the service providers anticipate POTS splitting as well as other solutions.

In particular, some manufacturers plan to adopt a solution derived from the solid state electronic circuits of the SLIC type as currently employed on the subscriber boards to have the speech signals and ADSL signals added together upstream of the line drive circuit portion.

However, this solution does not seem practicable with conventional line drive portions, since these involve handling the high-frequency signals by the same circuits which are to handle the necessarily high voltages (about 160V) used for the line supply and the call signals.

In fact, current technologies are inadequate to provide elementary components which can be operated at high voltages and good rates. Consequently, the objectives of the ADSL_Lite specification cannot be achieved without a POTS splitting function.

### SUMMARY OF THE INVENTION

Embodiments of the invention provide an integrated circuit with suitable structural and functional features to drive a two-wire telephone line for transmitting digital data at a very high rate, thereby overcoming the drawbacks with which prior solutions are beset.

Therefore, embodiments of the invention supply to the pair of final amplifier stages connected to a respective lead of the two-wire line, a respective signal in phase opposition, so as to obtain at the output an AC+DC differential voltage for driving the telephone line. Thus, the two outputs of the driver circuit are coupled to the input signals.

Based on this principle, presented is a device for deriving a reference voltage from the supply voltage, and including a low-voltage supply network being input a DC signal and producing a voltage reference to be added to said reference voltage for delivery to one input of each output stage, the other input of each stage receiving an AC signal in order to present at the circuit output a suitable AC+DC differential voltage for driving the telephone line.

The features and advantages of a circuit according to the invention will become apparent from the following description of an embodiment thereof, given by way of example and not of limitation with reference to the accompanying drawings.

### BRIEF DESCRIPTION OF THE DRAWINGS

Figure 1 is a schematic diagram of a portion of an integrated driver circuit for a two-wire telephone line, according to an embodiment of this invention.
Figure 2 is a voltage vs. voltage plot showing graphically the input and output DC voltage values for the circuit of Figure 1.

### DETAILED DESCRIPTION

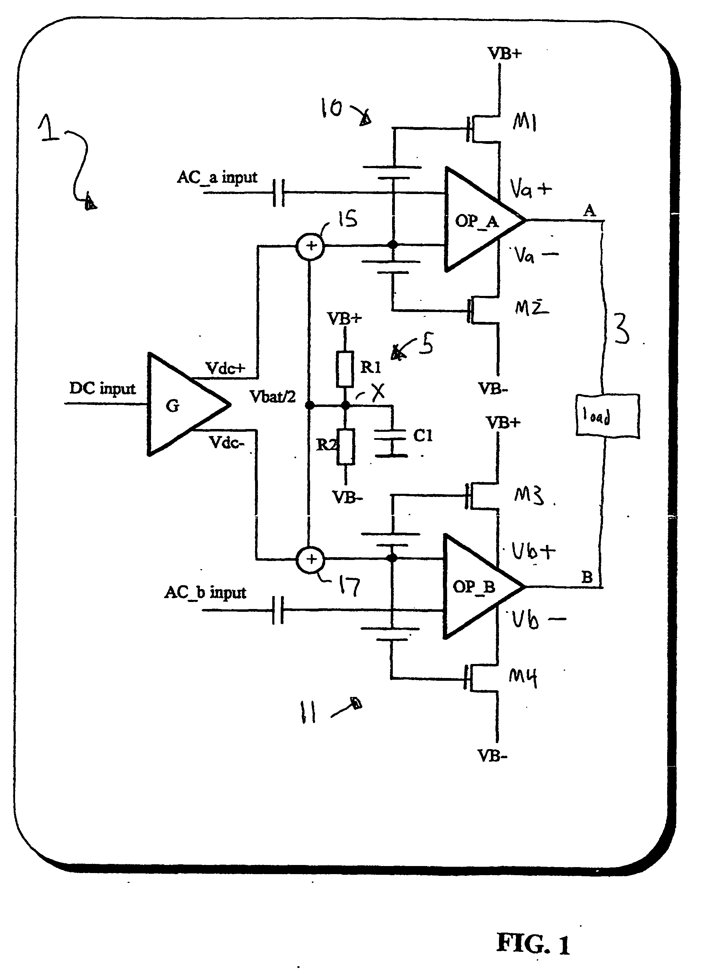

Referring to the drawing figures, in particular to Figure 1, a portion of a monolithically integrated SLIC (Subscriber Line Interface Circuit) is generally shown at 1 as installed to a telephone exchange.

The circuit 1 is powered from a battery sourcing two voltage references VB+ and VB-, and has its output connected to a two-wire telephone line linking a subscriber's set and including a pair of leads A and B.

Provided within the interface circuit 1 is a bridge circuit structure which includes two final amplifier stages 10, 11 having the line 3, and the apparatus linked thereto, connected as a load therebetween. In the presence of a signal, these amplifiers will drive the line in phase opposition.

The circuit 1 drives the line 3 through an output pair, namely a first terminal (TIP) connected to the lead A and a second terminal (RING) connected to the lead B. These outputs are respectively supplied line currents and voltages.

The circuit 1 is constructed of two separate circuit portions, each having predetermined operational characteristics to be described.

More particularly in this embodiment, the output circuit portion of the circuit 1 comprises an essentially bridge type of structure which draws voltage from the DC battery supply sourcing the values VB+ and VB- and from a potential reference node X provided internally of the circuit 1 to supply the value Vbat/2.

The circuit 1 supplies the line 3 with a DC voltage in compliance with applicable standards. An output amplifier, referenced G, is input a DC reference signal which is used to create a floating supply for the amplifier, the latter being therefore connected in a low-voltage network.

The output circuit portion of the circuit 1 is shown in Figure 1 to comprise a pair of output stages 10, 11, one for each line terminal TIP and RING.

The stages 10, 11 include an operational amplifier each, OP_A for the line A and OP_B for the line B. Each amplifier in the stages 10, 11 is supplied the battery references VB+ and VB- through respective MOS transistors with buffer function which are connected to the amplifiers in a source-follower configuration.

Shown in Figure 1 are the buffer transistors M1, M2 for the stage 10 and the buffer transistors M3, M4 for the stage 11. -

The amplifier OP_A of the stage 10 receives, on a signal input thereof, a signal AC_a which comprises a speech band and a band in the ADSL_Lite specification, while the amplifier OP_B of the stage 11 receives a signal AC_b on a signal input thereof.

Compared to prior solutions, the circuit of this embodiment has the output stages 10, 11 supplied with a low voltage. In the prior art, these stages were instead supplied the maximum supply voltage.

Thus, the AC signal comprising the speech band and the ADSL_Lite band is applied to the respective inputs of the output stages 10, 11 through a DC decoupling network. This decoupling network may be a simple capacitor connected upstream of each input.

Furthermore, by separating the AC and DC signal paths, it becomes possible to optimize the circuit portions that are to handle these signals.

The output circuit portion includes a device 5 effective to generate a voltage being one half the voltage from the circuit 1 supply battery. This device comprises essentially a resistive divider formed of a pair of resistors R1, R2. The interconnection node X between the two resistors is taken to a ground voltage reference through a capacitor C1 which is used to suppress noise from the battery supply voltages VB+ and VB-.

The output amplifier G generates two voltages Vdc+ and Vdc- in phase opposition, having suitable gains, from the DC input signal.

The voltage values Vbat/2 and Vdc+ are added together in a summing node 15 provided upstream of an input of the output stage, and represent the DC reference for the first output stage 10 having the amplifier OP_A. Likewise from the voltages Vbat/2 and Vdc-, a reference voltage is generated in another summing node 17 for the second output stage 11 having the amplifier OP_B.

Two additional voltages are derived from these reference voltages, namely Va+, Va- for the first stage 10, and Vb+, Vb- for the second stage 11. The voltages Va+, Va- are supplied, as suitably buffered through the transistors M1, M2, to the operational amplifier OP_A, and the voltages Vb+, Vb-, suitably buffered through the transistors M3, M4, are supplied to the operational amplifier OP_B.

The excess difference of potential relative to the overall supply voltage (|VB+| + |VB-|) will locate at the opposite ends of the buffer transistors associated with the operational amplifiers OP_A and OP_B. The DC voltage on the leads A and B will be the same value as Vbat/2, if the voltage applied to the DC input of the output amplifier G is zero.

As the input DC voltage increases, the voltage on the lead A tends to the value VB+, and that in the lead B tends to the value VB-.

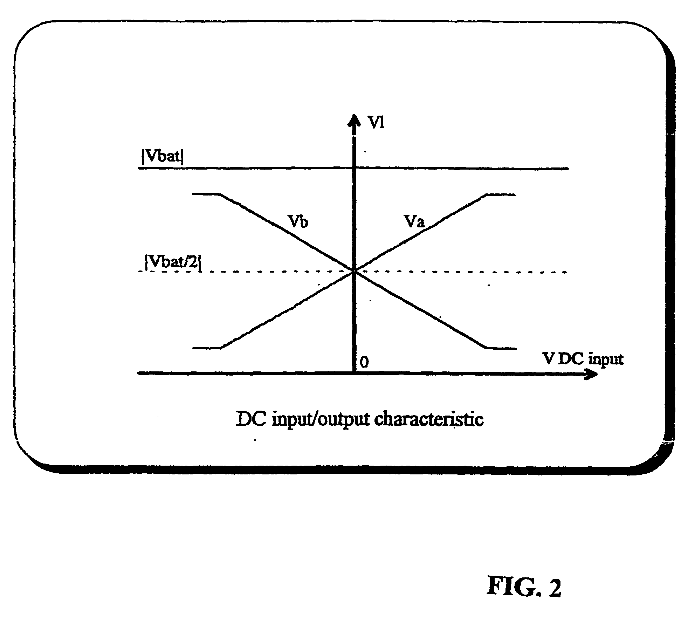

By contrast, when the value of the input DC voltage to the output amplifier G is negative, a reverse shift of the two leads will occur as shown schematically in Figure 2.

When the two operational amplifiers OP_A, OP_B are supplied a signal in phase opposition, to the signal inputs AC_a and AC-b, an AC+DC differential voltage is obtained at the output which is suitable to drive the telephone line 3.

This embodiment of the invention, by using the intermediate node X to the reference potential Vbat/2, allows the outputs A, B to be directly related to the input signals. Thus, the circuit 1 can also have polarity reversal and injection functions in the lead RING by applying a suitable signal to the DC input of the output amplifier G.

The circuit 1 can also be operated under such hard conditions as the occurrence of lightning and power cross situations, both events being quite trying for the output stages 10, 11.

It will be appreciated from the foregoing that, whereas specific embodiments of the invention have been described for illustrative purposes, many modifications could be made unto the invention without departing from its scope. Accordingly, the invention is to be only limited by the scope of the following claims.

Changes can be made to the invention in light of the above detailed description. In general, in the following claims, the terms used should not be construed to limit the invention to the specific embodiments disclosed in the specification and the claims, but should be construed to include all methods and devices that are in accordance with the claims. Accordingly, the invention is not limited by the disclosure, but instead its scope is to be determined by the following claims.

## Claims

1. A monolithically integrated telephone circuit (1) for driving wide-band telephone lines and transmitting digital data at a very high frequency, the telephone circuit powered from a battery DC supply providing a first and a second voltage reference, and comprising:
an output circuit portion including a pair of differential output stages (10,11) each having a pair of inputs and being connected with its output to a respective lead of a two-wire telephone line (A,B);
a device for deriving a third reference voltage (5) from the battery DC supply;
a low-voltage supply network (G) having an input terminal structured to accept a DC signal and produce a fourth and fifth voltage reference to be added to said third reference voltage for delivery to one input of each differential output stage (10,11); and
the other input of each output differential stage (10,11) structured to receive an AC signal in order to, between the pair of differential output stages, provide an AC+DC differential voltage for driving the two-wire telephone line (A,B).

2. The telephone circuit according to claim 1, wherein the low-voltage supply network (G) includes an output amplifier having an input structured to receive the DC signal and operable to produce the fourth and fifth voltage reference in a floating supply, in phase opposition to the output amplifier.

3. The telephone circuit according to claim 1, wherein each differential output stage (10,11) is coupled between the first and second voltage references through respective MOS buffer transistors (M1-M4) which are connected to the respective output differential stages in a source-follower configuration.

4. The telephone circuit according to claim 1, wherein the device for deriving the third reference voltage (5) is a resistive divider, comprising at least a resistor pair (R1,R2).

5. The telephone circuit according to claim 4, further comprising an interconnection node (x) between the resistor pair, the interconnection node coupled to a ground voltage reference through a filtering capacitor (C1).

6. The telephone circuit according to claim 1, wherein the AC signal applied to the other input of each differential output stage (10,11) comprises a speech band and a band of the ADSL-Lite type.

7. The telephone circuit according to claim 6, wherein said AC signal is applied to respective inputs of the differential output stages through a DC decoupling network.

8. The telephone circuit according to claim 7, wherein said DC decoupling network comprises a capacitor connected in series with each respective input of the differential output stages.

9. The telephone circuit according to claim 1, wherein said AC signals applied to respective inputs of the differential output stages are in phase opposition.

10. The telephone circuit according to claim 1, further comprising a summing node connected to each respective input to the differential output stages that is coupled to the third reference voltage.

11. A telephone circuit according to claim 1 comprising:
a first DC voltage reference;
an amplifier structured to accept a DC input and provide a first and a second DC voltage signal in phase opposition to one another;
a first and a second differential amplifier (OP_A, OP_B), each having a first input terminal, a second input terminal and an output terminal, the output terminal of the first differential amplifier coupled to the first telephone wire (A), and the output terminal of the second differential amplifier coupled to the second telephone wire (B);
a first summing node (15) coupled to the first input of the first differential amplifier (OP_A) and structured to add the first DC voltage reference to the first DC voltage signal;
a second summing node (17) coupled to the first input of the second differential amplifier (OP_B) and structured to add the first DC voltage reference to the second DC voltage signal;
a first AC signal coupled to the second input of the first differential amplifier; and
a second AC signal coupled to the second input of the second differential amplifier.

12. The telephone circuit of claim 11 further comprising:
a first MOS transistor coupled between a second DC voltage reference and the first differential amplifer;
a second MOS transistor coupled between the first differential amplifier and a third DC voltage reference;
a third MOS transistor coupled between the second DC voltage reference and the second differential amplifer; and
a fourth MOS transistor coupled between the second differential amplifier and the third DC voltage reference.

13. The telephone circuit of claim 11 further comprising:
a resistive voltage divider having a first and a second resistor (R1,R2) each having a first and a second terminal, the first terminal of the first resistor coupled to the second DC voltage reference, and the second terminal of the first resistor coupled to the first DC voltage reference; and
the first terminal of the second resistor coupled to the first DC voltage reference, and the second terminal of the second resistor coupled to the third DC voltage reference.

14. The telephone circuit of claim 11 further comprising a first capacitor coupled between the first DC voltage and a ground voltage reference.

15. The telephone circuit of claim 11 further comprising:
a first capacitor coupled between the first AC signal and the second input of the first differential amplifier; and
a second capacitor coupled between the second AC signal and the second input of the second differential amplifier.

16. A method of driving a telephone line having a first wire (A) and a second wire (B), the method comprising:
accepting a DC signal, and a first and second AC signal;
amplifiying the DC signal and converting it into a first DC voltage and a second DC voltage, the first and second DC voltages in phase opposition to one another;
adding the first DC voltage to a DC reference to generate a first DC combination signal, and providing the first DC combination signal to a first terminal of a first operational amplifier (OP_A);
adding the second DC voltage to the DC reference to generate a second DC combination signal, and providing the second DC combination signal to a first terminal of a second operational amplifer (OP_B);
providing the first AC signal to a second terminal of the first operational amplifier (OP_A);
providing the second AC signal to a second terminal of the second operational amplifier (OP_B); and
providing an output of the first operational amplifier (OP_A) to the first wire of the telephone line (A);
providing an output of the second operational amplifier (OP_B) to the second wire of the telephone line (B).

17. The method of claim 16 further comprising:
coupling the first and second operational amplifiers (OP_A, OP_B) between a first DC voltage reference and a second DC voltage reference.

## Patentansprüche

1. Monolithisch integrierte Telefonschaltung (1) zum Treiben von Breitbandtelefonleitungen und zur Übertragung von digitalen Daten mit sehr hoher Frequenz, wobei die Telefonschaltung von einer Gleichstrombatterieversorgung gespeist wird, die eine erste und eine zweite Referenzspannung bereitstellt, und umfassend:
Einen Ausgangsschaltungsteil mit einem Paar Differenzialausgangsstufen (10, 11), die jeweils ein Paar Eingänge aufweisen und mit ihrem Ausgang mit einem entsprechenden Anschluss einer Zweidrahttelefonleitung (A, B) verbunden sind;
eine Vorrichtung zum Ableiten einer dritten Referenzspannung (5) aus der Gleichstrombatterieversorgung;
ein Niederspannungsversorgungsnetzwerk (G) mit einem Eingangsanschluss, der aufgebaut ist, um ein Gleichstromsignal entgegen zu nehmen und eine vierte und fünfte Referenzspannung zu erzeugen, die zu der dritten Referenzspannung addiert werden soll, um an einen Eingang der jeweiligen Differenzialausgangsstufe (10, 11) bereitgestellt werden; und wobei
der andere Eingang jeder Differenzialausgangsstufe (10, 11) aufgebaut ist, um ein Wechselspannungssignal zu empfangen, um eine Wechselstrom- und Gleichstromdifferenzialspannung zum Treiben der Zweidrahttelefonleitung (A, B) zwischen dem Paar der Differenzialausgangsstufen bereitzustellen.

2. Telefonschaltung nach Anspruch 1, in der das Niederspannungsversorgungsnetzwerk (G) einen Ausgangsverstärker beinhaltet, der einen Eingang besitzt, der aufgebaut ist, um ein Gleichspannungssignal zu empfangen und betreibbar ist, um die vierte und fünfte Referenzspannung gegenphasig zu dem Ausgangsverstärker in galvanisch isolierter Versorgung bereitzustellen.

3. Telefonschaltung nach Anspruch 1, in der jede Differenzialausgangsstufe (10, 11) zwischen den ersten und zweiten Referenzspannungen über entsprechende MOS-Puffertransistoren (M1-M4) gekoppelt ist, die mit den entsprechenden Differenzialausgangsstufen in einer Source-Follower Konfiguration verbunden sind.

4. Telefonschaltung nach Anspruch 1, in der die Vorrichtung zum Ableiten der dritten Referenzspannung (5) ein Widerstandsteiler ist, der mindestens ein Widerstandspaar (R1, R2) umfasst.

5. Telefonschaltung nach Anspruch 4, ferner umfassend einen Verknüpfungsknoten (X) zwischen dem Widerstandspaar, der über einen Filterkondensator (C1) mit einer Erdreferenzspannung gekoppelt ist.

6. Telefonschaltung nach Anspruch 1, in der das an den anderen Eingang jeder Differenzialausgangsstufe (10, 11) angelegte Wechselspannungssignal ein Sprachband und ein Band der ASDL-Lite Art umfasst.

7. Telefonschaltung nach Anspruch 6, in der das Wechselspannungssignal an entsprechende Eingänge der Differenzialausgangsstufen über ein gleichspannungsentkoppelndes Netzwerk angelegt wird.

8. Telefonschaltung nach Anspruch 7, in der das gleichspannungsentkoppelnde Netzwerk einen Kondensator umfasst, der in Reihe mit jedem entsprechenden Eingang der Differenzialausgangsstufen verbunden ist.

9. Telefonschaltung nach Anspruch 1, in der die an entsprechenden Eingängen der Differenzialausgangsstufen angelegte Wechselspannungssignale gegenphasig sind.

10. Telefonschaltung nach Anspruch 1, ferner umfassend einen Summierungsknoten, der an jeden entsprechenden Eingang der Differenzialausgangsstufen gekoppelt ist, der mit der dritten Referenzspannung gekoppelt ist.

11. Telefonschaltung nach Anspruch 1, umfassend:
Eine erste Referenzgleichspannung;
einen Verstärker, der aufgebaut ist, um einen Gleichspannungseingang entgegen zu nehmen und ein erstes und ein zweites zueinander gegenphasiges Gleichspannungssignal bereitzustellen;
einen ersten und einen zweiten Differenzialverstärker (OP_A, OP_B), die jeweils einen ersten Eingangsanschluss, einen zweiten Eingangsanschluss und einen Ausgangsanschluss aufweisen, wobei der Ausgangsanschluss des ersten Differenzialverstärkers mit dem ersten Telefondraht (A) gekoppelt ist und der Ausgangsanschluss des zweiten Differenzialverstärkers mit dem zweiten Telefondraht (B) verbunden;
einen ersten Summierungsknoten (15), der mit dem ersten Eingang des ersten Differenzialverstärkers (OP_A) verbunden und aufgebaut ist, um die erste Referenzgleichspannung dem ersten Gleichspannungssignal hinzu zu addieren;
einen zweiten Summierungsknoten (17) der mit dem ersten Eingang des zweiten Differenzialverstärkers (OP_B) verbunden und aufgebaut ist, um die erste Referenzgleichspannung dem zweiten Gleichspannungssignal hinzu zu addieren;
ein erstes Wechselspannungssignal, das mit dem zweiten Eingang des ersten Differenzialverstärkers gekoppelt ist, und
ein zweites Wechselspannungssignal, das mit dem zweiten Eingang des zweiten Differenzialverstärkers gekoppelt ist.

12. Telefonschaltung nach Anspruch 11, ferner umfassend:
Einen ersten MOS-Transistor, der zwischen einer zweiten Referenzgleichspannung und dem ersten Differenzialverstärker gekoppelt ist; einen zweiten MOS-Transistor, der zwischen dem ersten Differenzialverstärker und einer dritten Referenzgleichspannung gekoppelt ist;
einen dritten MOS-Transistor, der zwischen der zweiten Referenzgleichspannung und dem zweiten Differenzialverstärker gekoppelt ist, und
einen vierten MOS-Transistor, der zwischen dem zweiten Differenzialverstärker und der dritten Referenzgleichspannung gekoppelt ist.

13. Telefonschaltung nach Anspruch 11, ferner umfassend:
Einen Widerstandsspannungsteiler mit einem ersten und einen zweiten Widerstand (R1, R2), die jeweils einen ersten und einen zweiten Anschluss aufweisen, wobei der erste Anschluss des ersten Widerstandes mit der zweiten Referenzgleichspannung gekoppelt ist und der zweite Anschluss des ersten Widerstandes mit der ersten Referenzgleichspannung gekoppelt ist, und
der erste Anschluss des zweiten Widerstandes mit der ersten Referenzgleichspannung und der zweite Anschluss des zweiten Widerstandes mit der dritten Referenzgleichspannung gekoppelt ist.

14. Telefonschaltung nach Anspruch 11, ferner umfassend einen ersten Kondensator, der zwischen der ersten Referenzgleichspannung und einer Referenzerdspannung gekoppelt ist.

15. Telefonschaltung nach Anspruch 11, ferner umfassend:
Einen ersten Kondensator, der zwischen dem ersten Wechselspannungssignal und dem zweiten Eingang des ersten Differenzialverstärkers gekoppelt ist, und einen zweiten Kondensator, der zwischen dem zweiten Wechselspannungssignal und dem zweiten Eingang des zweiten Differenzialverstärkers gekoppelt ist.

16. Verfahren zum Treiben einer Telefonleitung mit einem ersten Draht (A) und einem zweiten Draht (B), wobei das Verfahren umfasst:
Annehmen eines ersten Gleichspannungssignals und eines ersten und zweiten Wechselspannungssignals;
Verstärken des Gleichspannungssignals und dessen Umwandlung in eine erste Gleichspannung und eine zweite Gleichspannung, wobei die erste und die zweite Gleichspannung zueinander gegenphasig sind;
Addieren der ersten Gleichspannung zu einer Referenzgleichspannung, um ein erstes Gleichspannungskombinationssignal zu erzeugen, und Bereitstellen des ersten Gleichspannungskombinationssignals an einem ersten Anschluss eines ersten Operationsverstärkers (OP_A);
Addieren der zweiten Gleichspannung zu der Referenzgleichspannung, um ein zweites Gleichspannungskombinationssignal zu erzeugen, und Bereitstellen des zweiten Gleichspannungskombinationssignals an einem ersten Anschluss eines zweiten Operationsverstärkers (OP_B);
Bereitstellen des ersten Wechselspannungssignals an einem zweiten Anschluss des ersten Operationsverstärkers (OP-A);
Bereitstellen des zweiten Wechselspannungssignals an einem zweiten Anschluss des zweiten Operationsverstärkers (OP_B), und
Bereitstellen eines Ausgangs des ersten Operationsverstärkers (OP_A) an dem ersten Draht der Telefonleitung (A);
Bereitstellen eines Ausgangs des zweiten Operationsverstärkers (OP_B) an dem zweiten Draht der Telefonleitung (B).

17. Verfahren nach Anspruch 16, ferner umfassend:
Koppeln des ersten und des zweiten Operationsverstärkers (OP_A, OP_B) zwischen einer ersten Referenzgleichspannung und einer zweiten Referenzgleichspannung.

## Revendications

1. Circuit téléphonique à intégration monolithique (1) pour commander des lignes téléphoniques à large bande et transmettre des données numériques à une très haute fréquence, le circuit téléphonique étant alimenté à partir d'une alimentation en courant continu à batterie fournissant une première et une deuxième référence de tension et comprenant :
une partie de circuit de sortie comprenant deux étages différentiels de sortie (10, 11) chacun ayant deux entrées et étant connecté avec sa sortie à un conducteur respectif d'une ligne téléphonique bifilaire (A, B) ;
un dispositif pour dériver une troisième tension de référence (5) à partir de l'alimentation en courant continu à batterie ;
un réseau d'alimentation basse tension (G) ayant une borne d'entrée structurée pour recevoir un signal en courant continu et produire une quatrième et cinquième référence de tension à additionner à ladite troisième tension de référence pour la fourniture sur une entrée de chaque étage différentiel de sortie (10, 11) ; et
l'autre entrée de chaque étage différentiel de sortie (10, 11) étant structurée pour recevoir un signal en courant alternatif de manière à fournir, entre les deux étages différentiels de sortie, une tension différentielle en courant alternatif + courant continu pour commander la ligne téléphonique bifilaire (A, B).

2. Circuit téléphonique selon la revendication 1, dans lequel le réseau d'alimentation basse tension (G) comprend un amplificateur de sortie ayant une entrée structurée pour recevoir le signal en courant continu et pouvant fonctionner pour produire les quatrième et cinquième références de tension dans une alimentation flottante, en opposition de phase sur l'amplificateur de sortie.

3. Circuit téléphonique selon la revendication 1, dans lequel chaque étage différentiel de sortie (10, 11) est couplé entre les première et deuxième références de tension par le biais de transistors tampon MOS (M1-M4) respectifs qui sont connectés aux étages différentiels de sortie respectifs dans une configuration de suiveur de source.

4. Circuit téléphonique selon la revendication 1, dans lequel le dispositif pour dériver la troisième tension de référence (5) est un diviseur résistif, comprenant au moins une paire de résistances (R1, R2).

5. Circuit téléphonique selon la revendication 4, comprenant en outre un noeud d'interconnexion (X) entre la paire de résistances, le noeud d'interconnexion étant couplé à une référence de tension de masse par le biais d'un condensateur filtre (C1).

6. Circuit téléphonique selon la revendication 1, dans lequel le signal en courant alternatif appliqué à l'autre entrée de chaque étage différentiel de sortie (10, 11) comprend une bande vocale et une bande du type ADSL allégé.

7. Circuit téléphonique selon la revendication 6, dans lequel ledit signal en courant alternatif est appliqué aux entrées respectives des étages différentiels de sortie par le biais d'un réseau de découplage en courant continu.

8. Circuit téléphonique selon la revendication 7, dans lequel ledit réseau de découplage en courant continu comprend un condensateur connecté en série avec chaque entrée respective des étages différentiels de sortie.

9. Circuit téléphonique selon la revendication 1, dans lequel lesdits signaux en courant alternatif appliqués aux entrées respectives des étages différentiels de sortie sont en opposition de phase.

10. Circuit téléphonique selon la revendication 1, comprenant en outre un noeud d'addition connecté à chaque entrée respective aux étages différentiels de sortie qui est couplé à la troisième tension de référence.

11. Circuit téléphonique selon la revendication 1 comprenant :
une première référence de tension en courant continu ;
un amplificateur structuré pour recevoir une entrée en courant continu et fournir un premier et un deuxième signal de tension en courant continu en opposition de phase entre eux ;
un premier et un deuxième amplificateur différentiel (OP_A, OP_B), ayant chacun une première borne d'entrée, une deuxième borne d'entrée et une borne de sortie, la borne de sortie du premier amplificateur différentiel étant couplée au premier fil de ligne téléphonique (A) et la borne de sortie du deuxième amplificateur différentiel étant couplée au deuxième fil de ligne téléphonique (B) ;
un premier noeud d'addition (15) couplé à la première entrée du premier amplificateur différentiel (OP_A) et structuré pour additionner la première référence de tension en courant continu au premier signal de tension en courant continu ;
un deuxième noeud d'addition (17) couplé à la première entrée du deuxième amplificateur différentiel (OP_B) et structuré pour additionner la première référence de tension en courant continu au deuxième signal de tension en courant continu ;
un premier signal en courant alternatif couplé à la deuxième entrée du premier amplificateur différentiel ; et
un deuxième signal en courant alternatif couplé à la deuxième entrée du deuxième amplificateur différentiel.

12. Circuit téléphonique selon la revendication 11 comprenant en outre :
un premier transistor MOS couplé entre une deuxième référence de tension en courant continu et le premier amplificateur différentiel ;
un deuxième transistor MOS couplé entre le premier amplificateur différentiel et une troisième référence de tension en courant continu ;
un troisième transistor MOS couplé entre la deuxième référence de tension en courant continu et le deuxième amplificateur différentiel ;
un quatrième transistor MOS couplé entre le deuxième amplificateur différentiel et la
troisième référence de tension en courant continu.

13. Circuit téléphonique selon la revendication 11 comprenant en outre :
un diviseur de tension résistif ayant une première et une deuxième résistance (R1, R2) ayant chacune une première et une deuxième borne, la première borne de la première
résistance étant couplée à la deuxième référence de tension en courant continu et la deuxième borne de la première résistance étant couplée à la première référence de tension en courant continu ; et
la première borne de la deuxième résistance étant couplée à la première référence de tension en courant continu et la deuxième borne de la deuxième résistance étant couplée à la troisième référence de tension en courant continu.

14. Circuit téléphonique selon la revendication 11 comprenant en outre un premier condensateur couplé entre la première tension en courant continu et une référence de tension de masse.

15. Circuit téléphonique selon la revendication 11 comprenant en outre :
un premier condensateur couplé entre le premier signal en courant alternatif et la deuxième entrée du premier amplificateur différentiel ; et
un deuxième condensateur couplé entre le deuxième signal en courant alternatif et la deuxième entrée du deuxième amplificateur différentiel.

16. Procédé pour commander une ligne téléphonique ayant un premier fil (A) et un deuxième fil (B), le procédé comprenant de :
recevoir un signal en courant continu et un premier et un deuxième signal en courant alternatif ;
amplifier le signal en courant continu et le convertir en une première tension en courant continu et une deuxième tension en courant continu, les première et
deuxième tensions en courant continu étant en opposition de phase entre elles ;
additionner le premier signal en courant continu à une référence en courant continu pour générer un premier signal de combinaison en courant continu et appliquer le premier signal de combinaison en courant continu à une première borne d'un premier amplificateur opérationnel (OP_A) ;
additionner le deuxième signal en courant continu à la référence en courant continu pour générer un deuxième signal de combinaison en courant continu et appliquer le deuxième signal de combinaison en courant continu à une première borne d'un deuxième amplificateur opérationnel (OP_B) ;
appliquer le premier signal en courant alternatif à une deuxième borne du premier amplificateur opérationnel (OP_A) ;
appliquer le deuxième signal en courant alternatif à une deuxième borne du deuxième amplificateur opérationnel (OP_B) ;
appliquer une sortie du premier amplificateur opérationnel (OP_A) au premier fil de la ligne téléphonique (A) ;
appliquer une sortie du deuxième amplificateur opérationnel (OP_B) au deuxième fil de la ligne téléphonique (B).

17. Procédé selon la revendication 16 comprenant en outre de :
coupler les premier et deuxième amplificateurs opérationnels (OP_A, OP_B) entre une première référence de tension en courant continu et une deuxième référence de tension en courant continu.
